# EUROPÄISCHE PATENTSCHRIFT

(11) **EP 4 594 167 B1**
(45) Veröffentlichungstag und Bekanntmachung des Hinweises auf die Patenterteilung: **08.07.2026**
(21) Anmeldenummer: 22777253.0
(22) Anmeldetag: 26.09.2022
(51) Int. Cl.: B62J 45/415, B62M 25/08, B62M 9/123, B62J 45/411, B62M 6/45

(54) **VERFAHREN ZUM AUTOMATISIERTEN SCHALTEN IN EINEN FÜR DAS ANFAHREN GEEIGNETEN GANG, STEUEREINRICHTUNG, COMPUTERPROGRAMMPRODUKT, COMPUTERLESBARES MEDIUM, FAHRRAD**
METHOD FOR AUTOMATED SHIFTING INTO A GEAR SUITABLE FOR STARTING, CONTROL DEVICE, COMPUTER PROGRAM PRODUCT, COMPUTER READABLE MEDIUM, BICYCLE
PROCÉDÉ DE CHANGEMENT DE VITESSE AUTOMATIQUE DANS UN RAPPORT APPROPRIÉ POUR LE DÉMARRAGE, DISPOSITIF DE COMMANDE, PRODUIT DE PROGRAMME INFORMATIQUE, SUPPORT LISIBLE PAR ORDINATEUR, BICYCLETTE

(43) Veröffentlichungstag der Anmeldung: 06.08.2025
(73) Patentinhaber: ZF Friedrichshafen AG, 88046 Friedrichshafen (DE)
(72) Erfinder: JUNGABERLE, Alexander, 88281 Schlier (DE); SCHRAFF, Uwe, 88677 Markdorf (DE); WALLNER, Markus, 88046 Friedrichshafen (DE)
(74) Vertreter: ZF Friedrichshafen AG
(86) Internationale Anmeldenummer: PCT/EP2022/076615
(87) Internationale Veröffentlichungsnummer: WO 2024/067940

(56) Entgegenhaltungen:
- DE-A1- 102005 029 666

## Beschreibung

Die Erfindung betrifft ein Verfahren zum automatisierten Schalten in einen für das Anfahren geeigneten Gang, eine Steuereinrichtung, ein Computerprogrammprodukt, ein computerlesbares Medium, und ein Fahrrad.

Fahrräder mit elektrischem (Hilfs-)antrieb, beispielsweise E-Bikes und Pedelecs, erfreuen sich steigender Beliebtheit. Es sind auch sportliche E-Mountainbikes (eMTB) im Einsatz, die über Drehmomente von bis zu 110Nm am Motorabtrieb und bis zu 750W Maximalleistung verfügen. Damit können auch extreme Steigungen von mehr als 25° befahren werden.

Im eMTB-Bereich sind Kettenschaltungen weit verbreitet. Diese haben jedoch den Nachteil, dass keine Schaltung im Stillstand möglich ist. Befindet sich der Fahrer bei einem Anfahrvorgang am steilen Hang in einem ungünstigen Gang, wobei dieser Gang eine zu geringe Kadenz ermöglicht, steht nicht die volle Systemleistung zur Verfügung. Aus diesem Grund ist der Fahrer gezwungen, das Hinterrad anzuheben und das Fahrrad manuell in den optimalen Anfahrgang zu schalten. Dies kann aufgrund der Umweltbedingungen, zum Beispiel bei steilem Gelände, und auf Grund des Fahrradgewichts, zum Beispiel über 20 kg sehr mühsam werden.

Aus DE 10 2018 208 380 A1 ist ein Mehrganggetriebe für ein Fahrrad bekannt, welches unter Last sowohl in höhere als auch in niedrigere Gangstufen geschaltet werden kann.

DE 10 2005 029 666 A1 betrifft eine automatische Schaltungssteuerung für muskelkraftbetriebene oder unterstützte Fahrzeuge, die anhand von Sensordaten zur Fahrbahnneigung und Fahrzeugbewegung einen Anfahrgang auswählt und über Aktuatoren einstellt.

Der Erfindung liegt die Aufgabe zugrunde, die eingangs genannten Nachteile zu umgehen. Diese Aufgabe wird gelöst durch ein Verfahren zum automatisierten Schalten in einen für das Anfahren geeigneten Gang mit den Merkmalen nach Anspruch 1, eine Steuereinrichtung mit den Merkmalen nach Anspruch 4, ein Computerprogrammprodukt mit den Merkmalen nach Anspruch 5, ein computerlesbares Medium mit den Merkmalen nach Anspruch 6, und durch ein Fahrrad mit den Merkmalen nach Anspruch 7. Weiterbildungen sind in den Unteransprüchen enthalten und ergeben sich aus nachfolgender Beschreibung.

Bei einem Verfahren zum automatisierten Schalten in einen für das Anfahren geeigneten Gang eines Fahrradgetriebes, wobei der geeignete Gang eine Kadenz im Bereich von 60 U/min bis 120 U/min ermöglicht, werden bei aktivierter Anfahrunterstützung zuerst eine aktuelle Geschwindigkeit, ein aktueller Neigungswinkel, ein aktuelles Kurbelmoment und ein aktueller Gang des Fahrrads ermittelt. Anschließend wird die aktuelle Geschwindigkeit mit einem Geschwindigkeits-Schwellenwert verglichen. Es wird der aktuelle Neigungswinkel mit wenigstens einem Neigungswinkel-Schwellenwert verglichen. Es wird das aktuelle Kurbelmoment mit einem Kurbelmoment-Schwellenwert verglichen. Es wird der aktuelle Gang mit einem Gang-Schwellenwert verglichen. Daraufhin wird automatisiert in den geeigneten Gang geschaltet bei Erreichen oder Unterschreiten des Geschwindigkeits-Schwellenwerts durch die aktuelle Geschwindigkeit, und bei gleichzeitigem Erreichen oder Überschreiten des Kurbelmoment-Schwellenwerts durch das aktuelle Kurbelmoment, und bei gleichzeitigem Abweichen des aktuellen Ganges vom Gang-Schwellenwert, und entweder bei gleichzeitigem Erreichen oder Überschreiten eines ersten Neigungswinkel-Schwellenwerts durch den aktuellen Neigungswinkel, oder bei gleichzeitigem Unterschreiten eines zweiten Neigungswinkel-Schwellenwerts durch den aktuellen Neigungswinkel.

Unter dem Begriff Fahrrad sind hierbei sämtliche Fahrzeuge zu verstehen, welche sowohl einen elektrischen (Hilfs-)Antrieb als auch einen muskelkraftbetriebenen Antrieb aufweisen, wobei das Fahrrad entweder rein durch Muskelkraft oder rein elektrisch oder im Hybridbetrieb sowohl durch Muskelkraft als auch elektrisch angetrieben werden kann. In jedem Fall weist das Fahrrad eine Tretkurbeleinheit und eine elektrische Antriebseinheit auf. Das Fahrrad kann hierbei beispielsweise ausgeformt sein als E-Bike, (S-)Pedelec, eMTB, Velomobil, Cargobike oder als anderes geeignetes Fahrzeug.

Das Verfahren bezieht sich auf das Schalten eines Fahrradgetriebes. Bei dem Fahrradgetriebe handelt es sich beispielsweise um ein Mehrganggetriebe in Planetenbauweise. Es sind allerdings auch andere Getriebebauweisen möglich, mit welchen es möglich ist unter Last zu schalten. Das Fahrradgetriebe ist mit der elektrischen Antriebseinheit wirkverbunden. Zudem ist das Fahrradgetriebe mit der Tretkurbeleinheit wirkverbunden. Das Fahrradgetriebe kann als Tretlagergetriebe oder als Nabengetriebe ausgebildet sein.

Mittels des Verfahrens wird automatisiert in den geeigneten Gang geschaltet. Der geeignete Gang ist derjenige Gang, der eine Kadenz im Bereich von 60 U/min bis 120 U/min ermöglicht. Mit diesem Kadenz-Bereich ist insbesondere auch ein Kadenz-Bereich von 60 U/min bis 100 U/min abgedeckt. Dies entspricht der idealen Kadenz beim Menschen, bei welcher das Antreiben des Fahrrads als wenig anstrengend oder sogar als mühelos empfunden wird. Bei Fahrrädern mit E-Motoranbindung am Getriebeeingang, zum Beispiel bei Pedelecs, ist der E-Motor ebenfalls von der aktuellen Gangübersetzung abhängig und auf die menschliche Kadenz optimiert.

Das Verfahren wird nur bei aktivierter Anfahrunterstützung durchgeführt. Das heißt, wenn der Fahrer des Fahrrads den elektrischen (Hilfs-)Antrieb nicht aktiviert hat, wird das Verfahren nicht durchgeführt. Unter Anfahrunterstützung ist zu verstehen, dass die Antriebsleistung zum Anfahren mit dem Fahrrad durch eine Kombination aus Muskelkraft und elektrischer Antriebskraft zur Verfügung gestellt wird. Der Fahrer betätigt somit die Tretkurbeleinheit und gleichzeitig stellt der E-Motor Antriebskraft zur Verfügung.

In einem ersten Schritt des Verfahrens werden die aktuelle Geschwindigkeit des Fahrrads, ein aktueller Neigungswinkel des Fahrrads, ein aktuelles Kurbelmoment des Fahrrads und ein aktueller Gang des Fahrrads ermittelt. Dies kann vorzugsweise gleichzeitig erfolgen. Eine Ermittlung dieser Werte nacheinander ist aber ebenfalls möglich. Die Ermittlung der eben genannten Werte erfolgt vorzugsweise mittels geeigneter Sensoren. Diese Sensoren können beispielsweise direkt am Fahrrad verbaut sein. Jeder der benötigten Sensoren ist mit der Steuereinrichtung verbunden, die das Fahrrad aufweist. Diese jeweiligen Verbindungen sind signalwirksam ausgebildet, das heißt, dass ein Daten- und Signalaustausch zwischen der Steuereinrichtung und den jeweiligen Sensoren erfolgen kann. Alternativ ist es möglich, dass einzelne Sensoren oder sämtliche Sensoren in einer externen Einheit vorhanden sind, beispielsweise in einem mobilen Endgerät wie einem Smartphone, einer Smartwatch, einem Fitnesstracker oder ähnlichem. Wenn die Sensordaten des mobilen Endgeräts genutzt werden sollen, findet ein Daten- und Signalaustausch zwischen der externen Einheit und der Steuereinrichtung des Fahrrads statt, beispielsweise über eine Funkverbindung oder mittels kabelgebundener Kommunikation. Alternativ oder zusätzlich ist es möglich, dass einzelne oder alle dieser aktuellen Werte mittels Rechenmodellen ermittelt werden, wobei wiederum Sensordaten zu Grunde liegen, beispielsweise kann die aktuelle Geschwindigkeit berechnet werden mittels Sensordaten eines Beschleunigungssensors oder mittels Sensordaten eines Positionsbestimmungssystems wie zum Beispiel GPS.

Im Anschluss wird in einem zweiten Schritt des Verfahrens die aktuelle Geschwindigkeit mit dem Geschwindigkeits-Schwellenwert verglichen. Dadurch wird festgestellt, ob das Fahrrad stillsteht oder nahezu stillsteht, oder ob das Fahrrad eine hohe Geschwindigkeit aufweist. Der Geschwindigkeits-Schwellenwert ist in der Steuereinrichtung des Fahrrads in einer Speichereinrichtung hinterlegt. Dieser Geschwindigkeits-Schwellenwert ist vorzugsweise werksseitig hinterlegt. Der Geschwindigkeits-Schwellenwert ist so gewählt, dass dieser einer langsamen Geschwindigkeit des Fahrrads entspricht, so dass auf einen Stillstand oder Nahezu-Stillstand des Fahrrads geschlossen werden kann.

Der Begriff "Schwelle" oder "Schwellenwert" bezeichnet hierbei keinen globalen Grenzwert, der physikalisch nicht über- oder unterschritten werden kann. Es handelt sich vielmehr um einen von einem Nutzer festgelegten, bestimmten Wert.

In einem dritten Schritt des Verfahrens, der gleichzeitig oder nachgelagert zum zweiten Schritt erfolgen kann, wird der der aktuelle Neigungswinkel mit dem wenigstens einem Neigungswinkel-Schwellenwert verglichen. Dadurch wird festgestellt, ob sich das Fahrrad an einer starken oder einer moderaten Steigung oder an einem Gefälle befindet. Hierbei ist der wenigstens eine Neigungswinkel-Schwellenwert in der Speichereinrichtung der Steuereinrichtung des Fahrrads hinterlegt. Der wenigstens eine Neigungswinkel-Schwellenwert ist vorzugsweise werksseitig hinterlegt. Ein erster Neigungswinkel-Schwellenwert ist so gewählt, dass dieser einer Steigung entspricht. Ein zweiter Neigungswinkel-Schwellenwert ist so gewählt, dass dieser einem Gefälle entspricht, wobei der zweite Neigungswinkel-Schwellenwert definitionsgemäß negativ ist. Es kann ein weiterer Neigungswinkel-Schwellenwert gewählt sein, der einer moderaten Steigung entspricht, wobei der erste Neigungswinkel-Schwellenwert dann einer starken Steigung entspricht.

In einem vierten Schritt des Verfahrens, der gleichzeitig oder nachgelagert zum zweiten und/oder dritten Schritt erfolgen kann, wird das aktuelle Kurbelmoment mit dem Kurbelmoment-Schwellenwert verglichen. Dadurch wird festgestellt, ob ein Anfahrwunsch des Fahrers vorliegt. Hierbei ist der Kurbelmoment-Schwellenwert in der Speichereinrichtung der Steuereinrichtung des Fahrrads hinterlegt. Der Kurbelmoment-Schwellenwert ist vorzugsweise werksseitig hinterlegt. Der Kurbelmoment-Schwellenwert ist so gewählt, dass er ein langsames Betätigen der Pedale durch den Fahrer abbildet.

In einem fünften Schritt des Verfahrens, der gleichzeitig oder nachgelagert zum zweiten und/oder dritten und/oder vierten Schritt erfolgen kann, wird der aktuelle Gang mit einem Gang-Schwellenwert verglichen. Dadurch wird festgestellt, ob ein zu niedriger oder zu hoher Gang gewählt ist. Der Gang-Schwellenwert ist dabei dynamisch. Dies heißt, dass dieser sich von Fahrsituation zu Fahrsituation ändert. Der Gang-Schwellenwert entspricht hierbei stets demjenigen Gang, der als geeigneter Gang für das Anfahren des Fahrrads in der jeweiligen Fahrsituation gilt. Dieser Gang-Schwellenwert wird mittels eines Rechenmodells bestimmt und festgelegt. Dabei wird ausgehend von der optimalen Kadenz, die im Bereich von 60 U/min bis 120 U/min liegen soll, ermittelt, welcher Gang diese Kadenz mit der gewählten Anfahrunterstützung ermöglicht.

In einem sechsten Schritt wird automatisiert in den geeigneten Gang geschaltet. Dies erfolgt mittels der Getriebeaktuatorik, die mittels der Steuereinrichtung angesteuert wird. Das Schalten in den geeigneten Gang erfolgt dann, wenn die aktuelle Geschwindigkeit den Geschwindigkeits-Schwellenwert erreicht oder unterschreitet, wenn gleichzeitig das aktuelle Kurbelmoment den Kurbelmoment-Schwellenwert erreicht oder überschreitet, wenn gleichzeitig der aktuelle Gang vom Gang-Schwellenwert abweicht, und entweder wenn gleichzeitig der aktuelle Neigungswinkel den ersten Neigungswinkel-Schwellenwert erreicht oder überschreitet, oder wenn gleichzeitig der aktuelle Neigungswinkel den zweiten Neigungswinkel-Schwellenwert unterschreitet.

Durch diese Alternative kann zum einen ein Anfahrvorgang an einer Steigung und zum anderen ein Anfahrvorgang an einem Gefälle unterstützt werden. Bei der Steigung wird dem Fahrer durch das Schalten in den geeigneten Gang das Anfahren insofern erleichtert, so dass dieser weniger Muskelkraft aufbringen muss. Bei dem Gefälle wird dem Fahrer durch das Schalten in den geeigneten Gang das Anfahren insofern erleichtert, dass dieser nicht "ins Leere" tritt.

Nach einer weiterbildenden Ausführungsform ist der geeignete Gang wenigstens eine Gangstufe kleiner ist als der aktuelle Gang, wenn der aktuelle Neigungswinkel den ersten Neigungswinkel-Schwellenwert erreicht oder überschreitet. Dadurch kann der Anfahrvorgang an einer Steigung im am besten geeigneten Gang erfolgen. Der Fahrer muss dadurch zum Anfahren weniger Muskelkraft aufbringen und sich weniger anstrengen.

Alternativ ist der geeignete Gang wenigstens eine Gangstufe größer ist als der aktuelle Gang, wenn der aktuelle Neigungswinkel den zweiten Neigungswinkel-Schwellenwert unterschreitet. Dadurch kann der Anfahrvorgang an einem Gefälle im am besten geeigneten Gang erfolgen. Der Fahrer tritt somit nicht "ins Leere", wenn er im Gefälle einen Anfahrvorgang durchführt.

Nach einer weiterbildenden Ausführungsform wird zusätzlich eine aktuelle Kadenz ermittelt, die mit einem Kadenz-Schwellenintervall verglichen wird, wobei das Schalten in den geeigneten Gang erfolgt, wenn die aktuelle Kadenz außerhalb des Kadenz-Schwellenintervalls liegt. Das Kadenz-Schwellenintervall entspricht einer Kadenz im Bereich von 60 U/min bis 120 U/min. Durch die zusätzliche Ermittlung der aktuellen Kadenz kann das Schalten in den geeigneten Gang plausibilisiert werden. Somit kann festgestellt werden, ob das Schalten tatsächlich zu einer Kadenz für den Fahrer führt, die innerhalb des Kadenz-Schwellenintervalls liegt.

Eine Steuereinrichtung für ein Fahrrad ist signalwirksam mit dem Fahrradgetriebe des Fahrrads verbindbar. Die Steuereinrichtung ist mit wenigstens einem Sensor signalwirksam verbindbar. Die Steuereinrichtung umfasst Mittel zur Ausführung des Verfahrens, das bereits in der vorherigen Beschreibung beschrieben worden ist. Die Steuereinrichtung kann beispielsweise als Domain-ECU oder als ECU ausgeführt sein.

Eine signalwirksame Verbindung ist dergestalt, dass ein Daten- und Signalaustausch zwischen den Verbindungspartnern möglich ist. Zu diesem Zweck weist jeder Verbindungspartner eine entsprechende Schnittstelle auf. Die Daten- und Signalübertragung kann entweder kabelgebunden oder drahtlos erfolgen.

Wenn die Steuereinrichtung in einem Fahrrad verwendet wird, ist diese mit dem Fahrradgetriebe, genauer mit der Aktuatorik des Fahrradgetriebes, signalwirksam verbunden, so dass die Steuereinrichtung die Aktuatorik ansteuern kann. Die Steuereinrichtung kann daher ein Hoch- oder Herunterschalten in andere Gangstufen initiieren. Weiterhin kann die Steuereinrichtung abgreifen, welcher Gang des Fahrradgetriebes eingelegt ist.

Wenn die Steuereinrichtung in einem Fahrrad verwendet wird, ist diese mit wenigstens einem Sensor signalwirksam verbunden. Die Steuereinrichtung erhält von den Sensoren Daten zur Geschwindigkeit, zum Kurbelmoment, zum Neigungswinkel und ggf. zu Kadenz. Beispielsweise kann die Steuereinrichtung mit einem Geschwindigkeitssensor, mit einem Kurbelmomentsensor, mit einem Neigungswinkelsensor und/oder mit einem mobilen Endgerät signalwirksam verbunden sein. Wenn die Steuereinrichtung mit dem mobilen Endgerät verbunden ist, kann dieses Daten- und Signale des mobilen Endgeräts erhalten, die die Sensoren, die im mobilen Endgerät vorhanden sind, erfassen. Beispielsweise kann die Steuereinrichtung die Neigungswinkeldaten, die Geschwindigkeitsdaten, die GPS-Daten o. ä. des mobilen Endgeräts nutzen.

Ein Computerprogrammprodukt umfasst Befehle, die bei der Ausführung des Programms durch die bereits beschriebene Steuereinrichtung diese veranlassen, das bereits beschriebene Verfahren auszuführen.

Ein computerlesbares Medium umfasst Befehle, die bei der Ausführung durch die bereits beschriebene Steuereinrichtung diese veranlassen, das bereits beschriebene Verfahren auszuführen. Das computerlesbare Medium kann beispielsweise als Datenträger verkörpert sein oder als herunterladbarer Datenstrom.

Das Fahrrad weist das Fahrradgetriebe und die Steuereinrichtung auf, die bereits in der vorherigen Beschreibung beschrieben worden ist. Das Getriebe ist mit der Steuereinrichtung signalwirksam verbunden. Die Steuereinrichtung kann somit die Aktuatorik des Getriebes ansteuern, so dass das Einlegen oder Auslegen eines Ganges und somit der Wechsel zwischen Gangstufen veranlasst werden kann. Das Fahrrad kann daher das Verfahren zum automatisierten Schalten in einen für das Anfahren geeigneten Gang des Fahrradgetriebes ausführen, das bereits beschrieben worden ist.

Das Fahrrad weist zusätzlich die Tretkurbeleinheit und die elektrische Antriebseinheit auf, wobei sowohl die elektrische Antriebseinheit, die beispielsweise einen E-Motor und einen Energiespeicher aufweisen kann, als auch die Tretkurbeleinheit mit dem Fahrradgetriebe wirkverbunden sind. Zudem weist das Fahrrad mehrere Sensoren auf, die mit der Steuereinrichtung signalwirksam verbunden sind, z. B. Geschwindigkeitssensoren, Kurbelmomentsensoren, Neigungswinkelsensoren, Kadenzsensoren und/oder mobile Endgeräte.

Ausführungsbeispiele der Erfindung sind in den Figuren dargestellt. Im Einzelnen zeigen:
- Fig. 1: eine schematische Darstellung eines Fahrrads nach einem Ausführungsbeispiel,
- Fig. 2: eine schematische Darstellung eines Fahrrads nach einem weiteren Ausführungsbeispiel,
- Fig. 3: eine schematische Darstellung des Fahrrads aus Fig. 1 oder Fig. 2 in einer ersten Fahrsituation,
- Fig. 4: eine schematische Darstellung eines Verfahrensablaufs zum automatisierten Schalten in einen für das Anfahren geeigneten Gang für die Fahrsituation aus Fig. 3,
- Fig. 5: eine schematische Darstellung des Fahrrads aus Fig. 1 oder Fig. 2 in einer zweiten Fahrsituation,
- Fig. 6: eine schematische Darstellung eines Verfahrensablaufs zum automatisierten Schalten in einen für das Anfahren geeigneten Gang für die Fahrsituation aus Fig. 5,
- Fig. 7: eine schematische Darstellung des Fahrrads aus Fig. 1 oder Fig. 2 in einer dritten Fahrsituation,
- Fig. 8: eine schematische Darstellung eines Verfahrensablaufs zum automatisierten Schalten in einen für das Anfahren geeigneten Gang für die Fahrsituation aus Fig. 7.

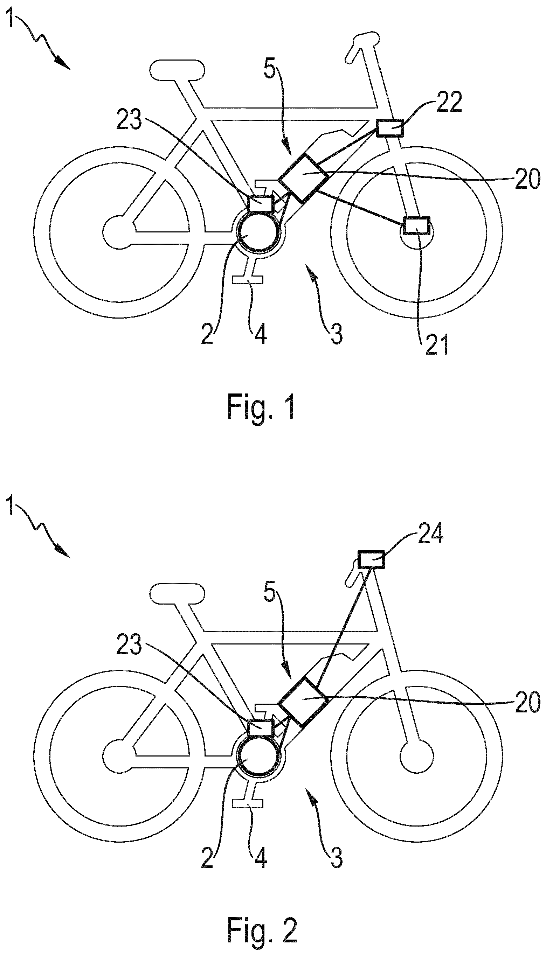

Fig. 1 zeigt eine schematische Darstellung eines Fahrrads 1 nach einem Ausführungsbeispiel. Das Fahrrad 1 ist als E-Bike oder Pedelec oder insbesondere als eMTB ausgebildet. Das Fahrrad 1 weist eine Tretkurbeleinheit auf, von welcher zur besseren Übersichtlichkeit nur die Pedale 4 dargestellt sind. Weiterhin weist das Fahrrad 1 die elektrische Antriebseinheit 3 auf, deren E-Motor beispielsweise im Bereich des Tretlagers angeordnet sein kann. Die elektrische Antriebseinheit 3 weist einen elektrischen Energiespeicher 5 auf, der mit dem E-Motor verbunden ist. Der Energiespeicher 5 kann den E-Motor mit elektrischer Energie versorgen (Motorbetrieb) oder kann mittels des E-Motors mit elektrischer Energie versorgt werden (Generatorbetrieb).

Das Fahrrad 1 weist zudem ein Fahrradgetriebe 2 auf, welches beispielsweise als Mehrgang-Planetengetriebe ausgeformt sein kann. Das Fahrradgetriebe 2 ist als Tretlagergetriebe ausgeformt. Das Fahrradgetriebe 2 ist mit der elektrischen Antriebseinheit 3 und mit dem Tretkurbeleinheit wirkverbunden. Das Fahrrad 1 kann daher entweder rein mit Muskelkraft oder rein elektrisch oder sowohl mit Muskelkraft als auch elektrisch angetrieben werden.

Das Fahrrad 1 weist eine Steuereinrichtung 20 auf, die mit dem Fahrradgetriebe 2, genauer mit der Aktuatorik des Fahrradgetriebes 2 signalwirksam verbunden ist.

Zudem weist das Fahrrad 1 mehrere Sensoren auf, die mit der Steuereinrichtung 20 signalwirksam verbunden sind. Das Fahrrad 1 weist einen Geschwindigkeitssensor 21 auf, der dazu eingerichtet ist, die aktuelle Geschwindigkeit des Fahrrads 1 zu ermitteln. Diesen Wert übermittelt der Geschwindigkeitssensor 21 an die Steuereinrichtung 20.

Das Fahrrad 1 weist einen Neigungswinkelsensor 22 auf, der dazu eingerichtet ist, den aktuellen Neigungswinkel des Fahrrads 1 zu ermitteln. Diesen Wert übermittelt der Neigungswinkelsensor 22 an die Steuereinrichtung 20.

Das Fahrrad 1 weist einen Kurbelmomentsensor 23 auf, der dazu eingerichtet ist, das aktuelle Kurbelmoment des Fahrrads 1 zu ermitteln. Diesen Wert übermittelt der Kurbelmomentsensor 23 an die Steuereinrichtung 20.

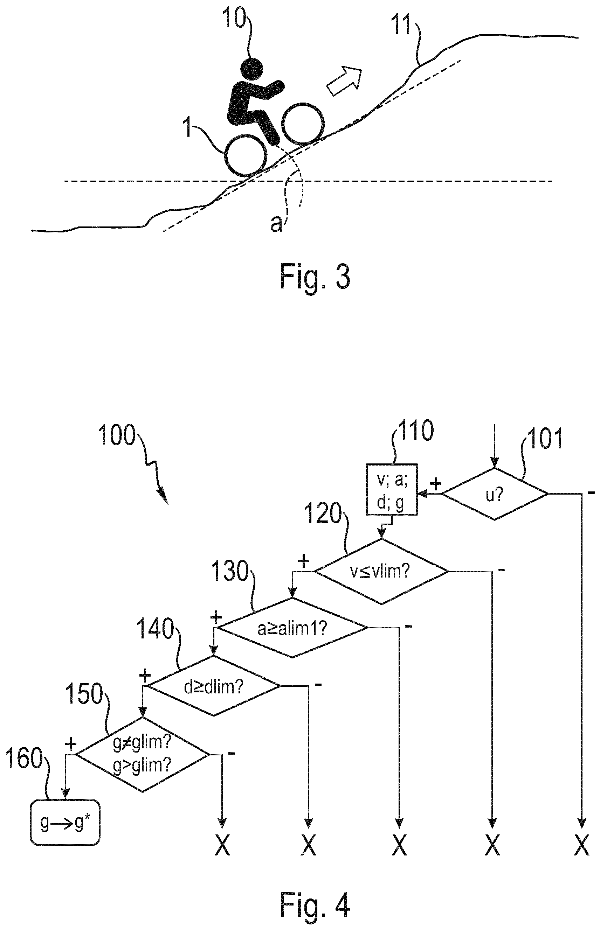

Ausgehend von den sensorisch ermittelten Werten kann ein Verfahren zum automatisierten Schalten in einen für das Anfahren geeigneten Gang des Fahrradgetriebes 2 durchgeführt werden, wie in den Verfahrensfließbildern der Figuren 4, 6 und 8 für verschiedene Fahrsituationen gemäß den Figuren 3, 5 und 7 dargestellt.

Fig. 2 zeigt eine schematische Darstellung eines Fahrrads 1 nach einem weiteren Ausführungsbeispiel. Das in Fig. 2 dargestellte Fahrrad 1 unterscheidet sich vom Fahrrad aus Fig. 1 nur dadurch, dass statt des Geschwindigkeitssensors und des Neigungswinkelsensors ein mobiles Endgerät 24, beispielsweise ein Smartphone, vorgesehen ist. Dieses mobile Endgerät 24 ist mit der Steuereinrichtung 20 signalwirksam verbunden. Das mobile Endgerät ist dazu eingerichtet, einen aktuellen Neigungswinkel des Fahrrads 1 und eine aktuelle Geschwindigkeit des Fahrrads 1 zu ermitteln. Diese Werte übermittelt das mobile Endgerät 24 an die Steuereinrichtung 20.

Ausgehend von den sensorisch ermittelten Werten kann auch mit dieser Fahrradkonfiguration das Verfahren zum automatisierten Schalten in einen für das Anfahren geeigneten Gang des Fahrradgetriebes 2 durchgeführt werden, wie in den Verfahrensfließbildern der Figuren 4, 6 und 8 für verschiedene Fahrsituationen gemäß den Figuren 3, 5 und 7 dargestellt.

Fig. 3 zeigt eine schematische Darstellung des Fahrrads 1 aus Fig. 1 oder Fig. 2 in einer ersten Fahrsituation. Der Fahrer 10 möchte mit dem Fahrrad 1 entlang der Fahrstrecke 11 in Fahrtrichtung, die durch den Blockpfeil dargestellt ist, an einer starken Steigung anfahren. Die Stärke der Steigung der Fahrstrecke 11 kann durch den aktuellen Neigungswinkel a ausgedrückt werden, den das Fahrrad 1 aufweist. Der Fahrer 10 hat die Anfahrunterstützung aktiviert, so dass das Verfahren gemäß Fig. 4 durchgeführt werden kann.

Fig 4 zeigt eine schematische Darstellung eines Verfahrensablaufs zum automatisierten Schalten in einen für das Anfahren geeigneten Gang g* für die Fahrsituation aus Fig. 3. Das Verfahren 100 weist insgesamt sechs Schritte 110, 120, 130, 140, 150, 160 sowie einen Initialschritt 101 auf. Erfolgt in einem der Schritte 110, 120, 130, 140, 150, 160 oder im Initialschritt eine Überprüfung von Werten oder ein Vergleich von Werten, kann das Verfahren 100 entweder beendet werden, wenn die Überprüfung oder Vergleich negativ ausfällt, was in der Figur mit einem Minus gekennzeichnet ist, oder das Verfahren 100 läuft weiter, was in der Figur mit einem Plus gekennzeichnet ist. Wird das Verfahren 100 abgebrochen, ist das in der Figur mit einem X dargestellt.

Der Initialschritt 101 umfasst eine Überprüfung, ob die Anfahrunterstützung u aktiviert ist. Ist die Anfahrunterstützung u nicht aktiviert, wird das Verfahren 100 beendet. Ist die Anfahrunterstützung u aktiviert, folgt der erste Schritt 110 des Verfahrens 100. Im ersten Schritt 110 des Verfahrens 100 werden sensorisch eine aktuelle Geschwindigkeit v, ein aktueller Neigungswinkel a, ein aktuelles Kurbelmoment d und ein aktueller Gang g des Fahrrads 1 ermittelt.

Im zweiten Schritt 120 des Verfahrens 100, der auf den ersten Schritt 110 folgt, wird die aktuelle Geschwindigkeit v mit einem Geschwindigkeits-Schwellenwert vlim verglichen. Ist die aktuelle Geschwindigkeit v größer als der Geschwindigkeits-Schwellenwert vlim, wird das Verfahren 100 abgebrochen. Ist die aktuelle Geschwindigkeit v kleiner oder gleich dem Geschwindigkeits-Schwellenwert vlim, wird das Verfahren 100 weitergeführt.

In einem dritten Schritt 130 des Verfahrens 100, der auf den zweiten Schritt 120 folgt, der aber alternativ auch gleichzeitig zum zweiten Schritt 120 durchgeführt werden kann, wird der aktuelle Neigungswinkel a mit einem ersten Neigungswinkel-Schwellenwert alim1 verglichen. Ist der aktuelle Neigungswinkel a kleiner als der erste Neigungswinkel-Schwellenwert alim1, wird das Verfahren 100 abgebrochen. Ist der aktuelle Neigungswinkel a größer oder gleich dem ersten Neigungswinkel-Schwellenwert alim1, wird das Verfahren 100 weitergeführt.

In einem vierten Schritt 140 des Verfahrens 100, der auf den dritten Schritt 130 folgt, der aber alternativ auch gleichzeitig zum dritten Schritt 130 durchgeführt werden kann, wird das aktuelle Kurbelmoment d mit einem Kurbelmoment-Schwellenwert dlim verglichen. Ist das aktuelle Kurbelmoment d kleiner als der Kurbelmoment-Schwellenwert dlim, wird das Verfahren 100 abgebrochen. Ist das aktuelle Kurbelmoment d größer oder gleich dem Kurbelmoment-Schwellenwert dlim, wird das Verfahren 100 weitergeführt.

In einem fünften Schritt 150 des Verfahrens 100, der auf den vierten Schritt 140 folgt, der aber alternativ auch gleichzeitig zum vierten Schritt 140 durchgeführt werden kann, wird der aktuelle Gang g mit dem Gang-Schwellenwert glim verglichen. Ist der aktuelle Gang g gleich dem Gang-Schwellenwert glim wird das Verfahren 100 abgebrochen. Ist der aktuelle Gang g kleiner als der Gang-Schwellenwert glim wird das Verfahren 100 ebenfalls abgebrochen. Ist der aktuelle Gang g ungleich dem Gang-Schwellenwert glim und ist der aktuelle Gang g größer als der Gang-Schwellenwert glim, wird das Verfahren 100 weitergeführt.

In einem sechsten Schritt 160 des Verfahrens 100, der auf den fünften Schritt 150 folgt, wird automatisiert vom aktuellen Gang g in den zum Anfahren geeigneten Gang g* geschaltet. In diesem Ausführungsbeispiel entspricht der geeignete Gang g* einem Gang, der wenigstens eine Gangstufe kleiner ist als der aktuelle Gang g. Dadurch ist es für den Fahrer möglich, an der starken Steigung aus Fig. 3 mühelos anzufahren. Der Fahrer muss somit für den Anfahrvorgang weniger Muskelkraft aufbringen.

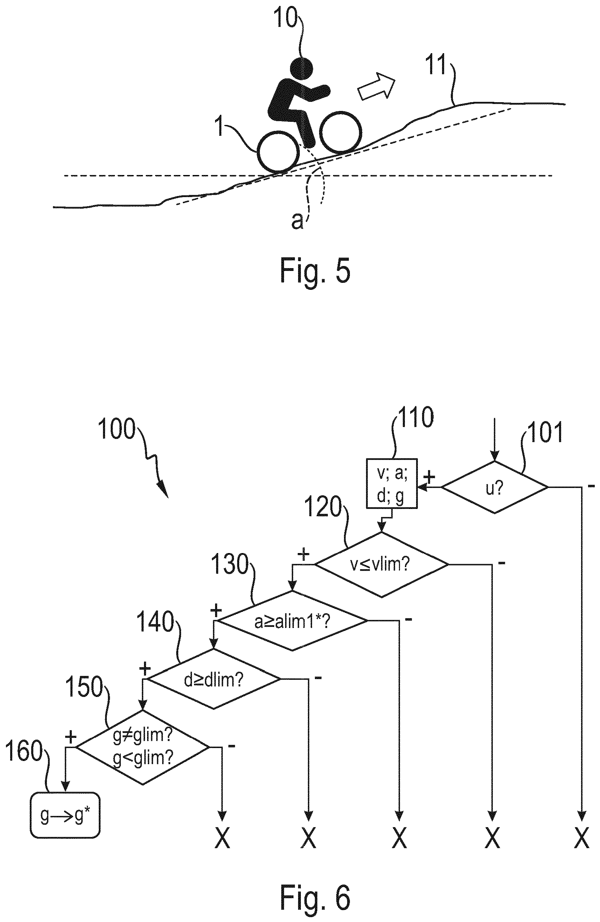

Fig. 5 zeigt eine schematische Darstellung des Fahrrads 1 aus Fig. 1 oder Fig. 2 in einer zweiten Fahrsituation. Der Fahrer 10 möchte mit dem Fahrrad 1 entlang der Fahrstrecke 11 in Fahrtrichtung, die durch den Blockpfeil dargestellt ist, an einer gemäßigten Steigung anfahren. Die Stärke der Steigung der Fahrstrecke 11 kann durch den aktuellen Neigungswinkel a ausgedrückt werden, den das Fahrrad 1 aufweist. Der Fahrer 10 hat die Anfahrunterstützung aktiviert, so dass das Verfahren gemäß Fig. 6 durchgeführt werden kann.

Fig. 6 eine schematische Darstellung eines Verfahrensablaufs zum automatisierten Schalten in einen für das Anfahren geeigneten Gang g* für die Fahrsituation aus Fig. 5. Das Verfahren 100 weist insgesamt sechs Schritte 110, 120, 130, 140, 150, 160 sowie einen Initialschritt 101 auf. Das Verfahren 100 in Fig. 6 unterscheidet sich vom Verfahren 100 aus Fig. 4 nur im dritten Schritt 130 und fünften Schritt 150, daher werden die übrigen Schritte 101, 110, 120, 140 nicht noch einmal wiederholt.

Der Initialschritt 101, der erste Schritt 110 und der zweite Schritt 120 sind identisch zu den in Fig. 4 beschriebenen Schritten 101, 110, 120.

In dem dritten Schritt 130 des Verfahrens 100, der auf den zweiten Schritt 120 folgt, der aber alternativ auch gleichzeitig zum zweiten Schritt 120 durchgeführt werden kann, wird der aktuelle Neigungswinkel a mit einem weiteren ersten Neigungswinkel-Schwellenwert alim1* verglichen. Ist der aktuelle Neigungswinkel a kleiner als der weitere erste Neigungswinkel-Schwellenwert alim1*, wird das Verfahren 100 abgebrochen. Ist der aktuelle Neigungswinkel a größer oder gleich dem weiteren ersten Neigungswinkel-Schwellenwert alim1*, wird das Verfahren 100 weitergeführt. Der erste Neigungswinkel-Schwellenwert alim1 aus Fig. 4 unterscheidet sich von dem weiteren erste Neigungswinkel-Schwellenwert alim1* aus Fig. 6 dadurch, dass der erste Neigungswinkel-Schwellenwert alim1 sich auf einen größeren Neigungswinkel bezieht als der weitere erste Neigungswinkel-Schwellenwert alim1*. Der weitere erste Neigungswinkel-Schwellenwert alim1* bildet somit eine moderate Steigung ab.

Der vierte Schritt 140 ist identisch zu dem vierten Schritt 140 aus Fig. 4.

In einem fünften Schritt 150 des Verfahrens 100, der auf den vierten Schritt 140 folgt, der aber alternativ auch gleichzeitig zum vierten Schritt 140 durchgeführt werden kann, wird der aktuelle Gang g mit dem Gang-Schwellenwert glim verglichen. Ist der aktuelle Gang g gleich dem Gang-Schwellenwert glim wird das Verfahren 100 abgebrochen. Ist der aktuelle Gang g größer als der Gang-Schwellenwert glim wird das Verfahren 100 ebenfalls abgebrochen. Ist der aktuelle Gang g ungleich dem Gang-Schwellenwert glim und ist der aktuelle Gang g kleiner als der Gang-Schwellenwert glim, wird das Verfahren 100 weitergeführt.

In einem sechsten Schritt 160 des Verfahrens 100, der auf den fünften Schritt 150 folgt, wird automatisiert vom aktuellen Gang g in den zum Anfahren geeigneten Gang g* geschaltet. In diesem Ausführungsbeispiel entspricht der geeignete Gang g* einem Gang, der wenigstens eine Gangstufe größer ist als der aktuelle Gang g. Dadurch ist es für den Fahrer möglich, an der moderaten Steigung aus Fig. 5 mühelos anzufahren. Der geeignete Gang g*, in den mittels des Verfahrens 100 in Fig. 6 geschaltet wird, ist dabei vorzugsweise größer als der geeignete Gang g*, in den mittels des Verfahrens 100 in Fig. 4 geschaltet wird.

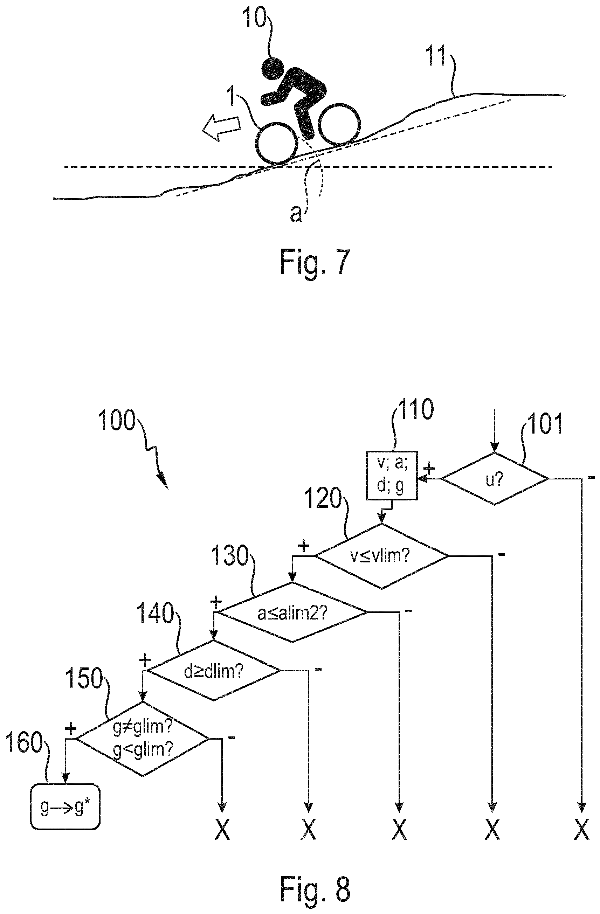

Fig. 7 zeigt eine schematische Darstellung des Fahrrads 1 aus Fig. 1 oder Fig. 2 in einer dritten Fahrsituation. Der Fahrer 10 möchte mit dem Fahrrad 1 entlang der Fahrstrecke 11 in Fahrtrichtung, die durch den Blockpfeil dargestellt ist, an einem Gefälle anfahren. Die Stärke der Gefälles der Fahrstrecke 11 kann durch den aktuellen Neigungswinkel a ausgedrückt werden, den das Fahrrad 1 aufweist. Der Fahrer 10 hat die Anfahrunterstützung aktiviert, so dass das Verfahren gemäß Fig. 8 durchgeführt werden kann.

Fig. 8 zeigt eine schematische Darstellung eines Verfahrensablaufs zum automatisierten Schalten in einen für das Anfahren geeigneten Gang g* für die Fahrsituation aus Fig. 7. Das Verfahren 100 weist insgesamt sechs Schritte 110, 120, 130, 140, 150, 160 sowie einen Initialschritt 101 auf. Das Verfahren 100 in Fig. 8 unterscheidet sich vom Verfahren 100 aus Fig. 4 nur im dritten Schritt 130 und fünften Schritt 150, daher werden die übrigen Schritte 101, 110, 120, 140 nicht noch einmal wiederholt.

Der Initialschritt 101, der erste Schritt 110 und der zweite Schritt 120 sind identisch zu den in Fig. 4 beschriebenen Schritten 101, 110, 120.

In dem dritten Schritt 130 des Verfahrens 100, der auf den zweiten Schritt 120 folgt, der aber alternativ auch gleichzeitig zum zweiten Schritt 120 durchgeführt werden kann, wird der aktuelle Neigungswinkel a mit einem zweiten Neigungswinkel-Schwellenwert alim2 verglichen. Ist der aktuelle Neigungswinkel a größer als der zweite Neigungswinkel-Schwellenwert alim2, wird das Verfahren 100 abgebrochen. Ist der aktuelle Neigungswinkel a kleiner oder gleich dem zweiten Neigungswinkel-Schwellenwert alim2, wird das Verfahren 100 weitergeführt. Der erste Neigungswinkel-Schwellenwert alim1 aus Fig. 4 unterscheidet sich von dem zweiten Neigungswinkel-Schwellenwert alim2 aus Fig. 8 dadurch, dass der erste Neigungswinkel-Schwellenwert alim1 sich auf eine Steigung bezieht und der zweite Neigungswinkel-Schwellenwert alim2 sich auf ein Gefälle bezieht. Der zweite Neigungswinkel-Schwellenwert alim2 ist definitionsgemäß negativ.

Der vierte Schritt 140 ist identisch zu dem vierten Schritt 140 aus Fig. 4.

In einem fünften Schritt 150 des Verfahrens 100, der auf den vierten Schritt 140 folgt, der aber alternativ auch gleichzeitig zum vierten Schritt 140 durchgeführt werden kann, wird der aktuelle Gang g mit dem Gang-Schwellenwert glim verglichen. Ist der aktuelle Gang g gleich dem Gang-Schwellenwert glim wird das Verfahren 100 abgebrochen. Ist der aktuelle Gang g größer als der Gang-Schwellenwert glim wird das Verfahren 100 ebenfalls abgebrochen. Ist der aktuelle Gang g ungleich dem Gang-Schwellenwert glim und ist der aktuelle Gang g kleiner als der Gang-Schwellenwert glim, wird das Verfahren 100 weitergeführt.

In einem sechsten Schritt 160 des Verfahrens 100, der auf den fünften Schritt 150 folgt, wird automatisiert vom aktuellen Gang g in den zum Anfahren geeigneten Gang g* geschaltet. In diesem Ausführungsbeispiel entspricht der geeignete Gang g* einem Gang, der wenigstens eine Gangstufe größer ist als der aktuelle Gang g. Dadurch ist es für den Fahrer möglich, im Gefälle aus Fig. 7 mühelos anzufahren. Der Fahrer muss tritt somit beim Anfahrvorgang nicht "ins Leere".

### Bezugszeichen

- 1: Fahrrad
- 2: Fahrradgetriebe
- 3: elektrische Antriebseinheit
- 4: Pedal
- 5: Energiespeicher
- 10: Fahrer
- 11: Fahrstrecke
- 20: Steuereinrichtung
- 21: Geschwindigkeitssensor
- 22: Neigungswinkelsensor
- 23: Kurbelmomentsensor
- 24: mobiles Endgerät

- 100: Verfahren
- 101: Initialschritt
- 110: erster Schritt
- 120: zweiter Schritt
- 130: dritter Schritt
- 140: vierter Schritt
- 150: fünfter Schritt
- 160: sechster Schritt

- a: aktueller Neigungswinkel
- alim1: erster Neigungswinkel-Schwellenwert
- alim1*: weiterer erster Neigungswinkel-Schwellenwert
- alim2: zweiter Neigungswinkel-Schwellenwert
- d: aktuelles Kurbelmoment
- dlim: Kurbelmoment-Schwellenwert
- g: aktueller Gang
- glim: Gang-Schwellenwert
- g*: geeigneter Gang
- k: aktuelle Kadenz
- klim: Kadenz-Schwellenintervall
- u: Anfahrunterstützung
- v: aktuelle Geschwindigkeit
- vlim: Geschwindigkeits-Schwellenwert
- X: Abbruch des Verfahrens

## Patentansprüche

1. Verfahren (100) zum automatisierten Schalten in einen für das Anfahren geeigneten Gang (g*) eines Fahrradgetriebes (2), wobei der geeignete Gang (g*) eine Kadenz (k) im Bereich von 60 U/min bis 120 U/min ermöglicht, wobei bei aktivierter Anfahrunterstützung (u) folgende Schritte durchgeführt werden
- Ermitteln einer aktuellen Geschwindigkeit (v), eines aktuellen Neigungswinkels (a), eines aktuellen Kurbelmoments (d) und eines aktuellen Ganges (g) des Fahrrads (1)
- Vergleichen der aktuellen Geschwindigkeit (v) mit einem Geschwindigkeits-Schwellenwert (vlim),
- Vergleichen des aktuellen Neigungswinkels (a) mit wenigstens einem Neigungswinkel-Schwellenwert (alim1, alim1*, alim2),
- Vergleichen des aktuellen Kurbelmoments (d) mit einem Kurbelmoment-Schwellenwert (dlim),
- Vergleichen des aktuellen Ganges (g) mit einem Gang-Schwellenwert (glim),
- automatisiertes Schalten in den geeigneten Gang (g*) bei Erreichen oder Unterschreiten des Geschwindigkeits-Schwellenwerts (vlim) durch die aktuelle Geschwindigkeit (v), und bei gleichzeitigem Erreichen oder Überschreiten des Kurbelmoment-Schwellenwerts (dlim) durch das aktuelle Kurbelmoment (d), und bei gleichzeitigem Abweichen des aktuellen Ganges (g) vom Gang-Schwellenwert (glim), und
i) entweder bei gleichzeitigem Erreichen oder Überschreiten eines ersten Neigungswinkel-Schwellenwerts (alim1, alim1*) durch den aktuellen Neigungswinkel (a),
ii) oder bei gleichzeitigem Unterschreiten eines zweiten Neigungswinkel-Schwellenwerts (alim2) durch den aktuellen Neigungswinkel (a).

2. Verfahren (100) nach Anspruch 1, wobei der geeignete Gang (g*) wenigstens eine Gangstufe kleiner ist als der aktuelle Gang (g), wenn der aktuelle Neigungswinkel (a) den ersten Neigungswinkel-Schwellenwert (alim1, alim1*) erreicht oder überschreitet, oder wobei der geeignete Gang (g*) wenigstens eine Gangstufe größer ist als der aktuelle Gang (g), wenn der aktuelle Neigungswinkel (a) den zweiten Neigungswinkel-Schwellenwert (alim2) unterschreitet.

3. Verfahren (100) nach einem der vorhergehenden Ansprüche, wobei zusätzlich eine aktuelle Kadenz (k) ermittelt wird, die mit einem Kadenz-Schwellenintervall (klim) verglichen wird, wobei das Schalten in den geeigneten Gang (g*) erfolgt, wenn die aktuelle Kadenz (k) außerhalb des Kadenz-Schwellenintervalls (klim) liegt.

4. Steuereinrichtung (20) für ein Fahrrad (1), wobei die Steuereinrichtung (20) mit einem Fahrradgetriebe (2) des Fahrrads (1) signalwirksam verbindbar ist, wobei die Steuereinrichtung (20) mit wenigstens einem Sensor signalwirksam verbindbar ist, und wobei die Steuereinrichtung (20) Mittel zur Ausführung des Verfahrens (100) nach einem der Ansprüche 1 bis 3 umfasst.

5. Computerprogrammprodukt, umfassend Befehle, die bei der Ausführung des Programms durch eine Steuereinrichtung (20) nach Anspruch 4 diese veranlassen, das Verfahren (100) nach einem der Ansprüche 1 bis 3 auszuführen.

6. Computerlesbares Medium, umfassend Befehle, die bei der Ausführung durch eine Steuereinrichtung (20) nach Anspruch 4 diese veranlassen, das Verfahren (100) nach einem der Ansprüche 1 bis 3 auszuführen.

7. Fahrrad (1), aufweisend ein Fahrradgetriebe (2) und eine Steuereinrichtung (20) nach Anspruch 4, wobei das Getriebe (2) mit der Steuereinrichtung (20) signalwirksam verbunden ist.

## Claims

1. Method (100) for automatically shifting to a gear (g*) of a bicycle gear system (2) that is suitable for start up, wherein the suitable gear (g*) allows a cadence (k) in the range of from 60 rpm to 120 rpm, wherein the following steps are carried out when start-up assist (u) is activated
- determining a current speed (v), a current angle of inclination (a), a current crank torque (d) and a current gear (g) of the bicycle (1),
- comparing the current speed (v) with a speed threshold value (vlim),
- comparing the current angle of inclination (a) with at least one angle of inclination threshold value (alim1, alim1*, alim2),
- comparing the current crank torque (d) with a crank torque threshold value (dlim),
- comparing the current gear (g) with a gear threshold value (glim),
- automatically shifting to the suitable gear (g*) when the current speed (v) reaches or falls below the speed threshold value (vlim) and when the current crank torque (d) simultaneously reaches or exceeds the crank torque threshold value (dlim) and when the current gear (g) simultaneously deviates from the gear threshold value (glim), and
i) either when the current angle of inclination (a) simultaneously reaches or exceeds a first angle of inclination threshold value (alim1, alim1*)
ii) or when the current angle of inclination (a) simultaneously falls below a second angle of inclination threshold value (alim2).

2. Method (100) according to Claim 1, wherein the suitable gear (g*) is at least one gear stage smaller than the current gear (g) when the current angle of inclination (a) reaches or exceeds the first angle of inclination threshold value (alim1, alim1*), or wherein the suitable gear (g*) is at least one gear stage greater than the current gear (g) when the current angle of inclination (a) falls below the second angle of inclination threshold value (alim2).

3. Method (100) according to either of the preceding claims, wherein a current cadence (k) is additionally determined and compared with a cadence threshold interval (klim), wherein shifting to the suitable gear (g*) takes place when the current cadence (k) is outside the cadence threshold interval (klim).

4. Control device (20) for a bicycle (1), wherein the control device (20) can be signal-transmittingly connected to a bicycle gear system (2) of the bicycle (1), wherein the control device (20) can be signal-transmittingly connected to at least one sensor, and wherein the control device (20) comprises means for carrying out the method (100) according to any of Claims 1 to 3.

5. Computer program product, comprising commands which, when the program is executed by a control device (20) according to Claim 4, cause it to carry out the method (100) according to any of Claims 1 to 3.

6. Computer-readable medium comprising commands which, when executed by a control device (20) according to Claim 4, cause it to carry out the method (100) according to any of Claims 1 to 3.

7. Bicycle (1), comprising a bicycle gear system (2) and a control device (20) according to Claim 4, wherein the gear system (2) is signal-transmittingly connected to the control device (20).

## Revendications

1. Procédé (100) de passage automatisé dans un rapport (g*) adapté au démarrage d'un engrenage de bicyclette (2), le rapport adapté (g*) permettant une cadence (k) dans la plage de 60 tr/min à 120 tr/min, les étapes suivantes étant réalisées lorsque l'assistance au démarrage (u) est activée
- la détermination d'une vitesse actuelle (v), d'un angle d'inclinaison actuel (a), d'un couple de pédalier actuel (d) et d'un rapport actuel (g) de la bicyclette (1)
- la comparaison de la vitesse actuelle (v) avec une valeur seuil de vitesse (vlim),
- la comparaison de l'angle d'inclinaison actuel (a) avec au moins une valeur seuil d'angle d'inclinaison (alim1, alim1*, alim2),
- la comparaison du couple de pédalier actuel (d) avec une valeur seuil de couple de pédalier (dlim),
- la comparaison du rapport actuel (g) avec une valeur seuil de rapport (glim),
- le passage automatisé dans le rapport adapté (g*) lorsque la vitesse actuelle (v) atteint ou passe en dessous de la valeur seuil de vitesse (vlim), et lorsque simultanément le couple de pédalier actuel (d) atteint ou dépasse la valeur seuil de couple de pédalier (dlim), et lorsque simultanément le rapport actuel (g) s'écarte de la valeur seuil de rapport (glim), et
i) soit lorsque simultanément l'angle d'inclinaison actuel (a) atteint ou dépasse un premier seuil d'angle d'inclinaison (alim1, alim1*),
ii) ou lorsque simultanément l'angle d'inclinaison actuel (a) passe en dessous d'un deuxième seuil d'angle d'inclinaison (alim2).

2. Procédé (100) selon la revendication 1, le rapport adapté (g*) étant d'au moins un rapport inférieur au rapport actuel (g) lorsque l'angle d'inclinaison actuel (a) atteint ou dépasse le premier seuil d'angle d'inclinaison (alim1, alim1*), ou le rapport adapté (g*) étant d'au moins un rapport supérieur au rapport actuel (g) lorsque l'angle d'inclinaison actuel (a) passe en dessous du deuxième seuil d'angle d'inclinaison (alim2).

3. Procédé (100) selon l'une quelconque des revendications précédentes, dans lequel une cadence actuelle (k) est en outre déterminée, laquelle est comparée à un intervalle seuil de cadence (klim), le passage dans le rapport adapté (g*) étant effectué lorsque la cadence actuelle (k) se situe en dehors de l'intervalle seuil de cadence (klim).

4. Dispositif de commande (20) pour un vélo (1), le dispositif de commande (20) pouvant être relié de manière à transmettre des signaux à un engrenage de bicyclette (2) de la bicyclette (1), le dispositif de commande (20) pouvant être relié de manière à transmettre des signaux à au moins un capteur, et le dispositif de commande (20) comprenant des moyens pour l'exécution du procédé (100) selon l'une quelconque des revendications 1 à 3.

5. Produit programme informatique, comprenant des instructions qui, lors de l'exécution du programme par un dispositif de commande (20) selon la revendication 4, amènent celui-ci à exécuter le procédé (100) selon l'une quelconque des revendications 1 à 3.

6. Support lisible par ordinateur, comprenant des instructions qui, lors de leur exécution par un dispositif de commande (20) selon la revendication 4, amènent celui-ci à exécuter le procédé (100) selon l'une quelconque des revendications 1 à 3.

7. Bicyclette (1), comprenant un engrenage de bicyclette (2) et un dispositif de commande (20) selon la revendication 4, l'engrenage (2) étant relié de manière à transmettre des signaux au dispositif de commande (20).
